## Europäisches Patentamt
## European Patent Office
## Office européen des brevets

(19)

(11) Veröffentlichungsnummer: **0 039 050**

**A1**

(12) # EUROPÄISCHE PATENTANMELDUNG

(21) Anmeldenummer: **81103062.6**

(22) Anmeldetag: **23.04.81**

(51) Int. Cl.³: **E 02 F 3/82**
**E 02 F 3/64, B 62 D 49/02**

(30) Priorität: **26.04.80 DE 3016146**

(43) Veröffentlichungstag der Anmeldung:
**04.11.81 Patentblatt 81/44**

(84) Benannte Vertragsstaaten:
**AT BE CH FR GB IT LI LU NL SE**

(71) Anmelder: **Döhle, Gerhard**
**Timmersloher Landstrasse 19**
**D-2800 Bremen 33(DE)**

(72) Erfinder: **Döhle, Gerhard**
**Timmersloher Landstrasse 19**
**D-2800 Bremen 33(DE)**

(74) Vertreter: **Bruse, Willy Hans Heinrich**
**Bergiusstrasse 35**
**D-2800 Bremen 33(DE)**

(54) **Schürfkübel für die Befestigung an einem Fahrzeug.**

(57) Schürfkübel (5) mit um eine Querachse (13) kippbarer Lagerung in einem Traggestell (7), welches an vertikal beweglichen Armen an der Vorderseite eines Fahrzeugs (1) befestigbar ist und Kolben-Zylinder-Einheiten für die Kippbewegungen trägt, die mit der Hydraulikanlage des Fahrzeugs (1) verbindbar sind, wobei ein flacher, das Traggestell bildender Halterahmen (7) und ein mit diesem um die an der Rahmenvorderseite angeordnete Querachse (10) schwenkbar verbundener, den Schürfkübel (5) tragender Kipprahmen (9) vorgesehen sind, die beide durch eine hinter der Querachse (10) angelenkte Kolben-Zylinder-Einheit (11) miteinander verbunden sind.

Fig. 2

0039050

- 1 -

Schürfkübel für die Befestigung an einem Fahrzeug

-------------------------------------------------------

Die Erfindung betrifft einen Schürfkübel mit um
eine Querachse kippbarer Lagerung in einem Traggestell,
welches an vertikal beweglichen Armen an der Vorderseite eines Fahrzeugs befestigbar ist und Kolben-
Zylindereinheiten für die Kippbewegungen trägt,
die mit einer Hydraulikanlage des Fahrzeugs verbindbar sind.

Im Einsatz sind Fahrzeuge mit an ihrer Vorderseite
angeordnetem Schürfkübel, der in Lagern an den freien
Enden eines in vertikalen Ebenen um eine Achse am
Fahrzeug schwenkbaren Armpaares um eine Querachse
kippbar gelagert ist. Zur Ausführung der Kipp-

- 2 -

bewegungen dienen hydraulisch betriebene Kolben-Zylindereinheiten, die einerseits auf dem Fahrzeug an einen Festpunkt angelenkt sind und andererseits gelenkig an ein Gestänge angreifen, dessen Ausbildung gewünschte Kippbewegungen ermöglicht. Es handelt sich hierbei in erster Linie um Spezialfahrzeuge, die nur für einen Verwendungszweck gestaltet sind (DE-AS 19 32 740). Eine Wandlung des Fahrzeugs für einen gleichartigen Zweck ist bei einigen dieser bekannten Ausführungen durch Auswechslung des Schürfkübels (zum Beispiel von Schaufelladern gemäß DE-PS 15 31 858) durch ein anderes Werkzeug, zum Beispiel ein Planierschild, möglich, jedoch nur durch eine Zeit in Anspruch nehmende und Werkzeug erfordernde Montage. In umgekehrt gleicher Weise ist es bekannt, Gabelstabler mit Zusatzgeräten auszurüsten, um diesen Gabelstabler dadurch vielfältiger nutzen zu können (DE-PS 14 81 089). Zur Befestigung der Zusatzgeräte sind in einigen Fällen Einschubtaschen an den Zusatzgeräten vorgesehen, in die die beiden Arme eines Gabelstablers einschiebbar sind. Bei einer dieser bekannten Ausführungen (DE-OS 28 23 349) ist ein Schüttgut-Transportbehälter um eine Querachse mittels Kolben-Zylindereinheiten kippbar in einem Traggestell angeordnet, so daß der Behälter gekippt und unter Benutzung des Hubwerks für die Gabelstaplerarme gehoben und gesenkt werden kann.

- 3 -

Aufgabe der Erfindung ist die Ausbildung eines Schürfkübels in der Weise, daß er möglichst ohne Montagearbeiten leicht und trotzdem sicher mit einem Mehrzweckfahrzeug , insbesondere einem Gabelstabler, verbunden werden und Kippbewegungen nach vorn zur Erzielung einer optimalen Schürfstellung sowie zur Entleerung und auch eine Kippbewegung nach hinten in eine Transportstellung ausführen kann. Vor allem soll ein solcher Schürfkübel an der Vorderseite eines Gabelstablers als Dungschrapper für die Entmistung von Stallanlagen einsetzbar sein.

Zur Lösung dieser Aufgabe ist erfindungsgemäß im wesentlichen ein flacher Halterahmen und ein Kipprahmen vorgesehen, die beide um eine an der Rahmenvorderseite angeordnete Querachse gelenkig miteinander verbunden sind, wobei der Kipprahmen den Schürfkübel trägt und mittels einer Kolben-Zylindereinheit an den Halterahmen angelenkt ist. Von besonderem Vorteil ist eine Ausbildung, bei der der Schürfkübel mit dem Kipprahmen um eine zweite, hinter der ersteren angeordneten Querachse gelenkig und mittels einer vor dieser zweiten Querachse angelenkten Kolben-Zylindereinheit beweglich verbunden ist.

Zur Befestigung des Schürfkübels weist der Halterahmen Parallel zueinander und parallel zu der Ausdehnungsebene des Halterahmens sich erstreckende Einschubtaschen auf, in die die beiden Arme eines Gabelstablers einschiebbar sind.. Dadurch ist ohne Montagearbeiten eine sichere Verbindung des Schürfkübels mit den Armen eines Gabelstablers möglich. Allein mit Maschienenkraft kann der Schürfkübel von einem Gabelstabler aufgenommen und wieder abgesetzt werden. Für die Herstellung der Anschlüße der Kolben-Zylindereinheiten an die Hydraulikanlage des Gabelstablers eignen sich handelsübliche Schnellverschlüße mit Absperrsicherung. Vertikalbewegungen des Schürfkübels lassen sich mit dem Hubwerk für die Gabelarme ausführen. Erstmals ist es durch die Anordnung eines Kipprahmens zwischen dem Halterahmen und dem Schürfkübel möglich, auch Kippbewegungen nach vorn in Richtung der offenen Seite des Schürfkübels und zurück auszuführen, so daß eine optimale Schürfstellung und eine größere Kippbewegung nach vorn zur Entleerung des Schürfkübels ausgeführt werden können. Erst dadurch wird der Schürfkübelbetrieb unabhängig von der Konstruktion des Fahrzeugs möglich. Es kann darauf verzichtet werden, mit dem Fahrzeug Gestängeverbindungen herzustellen, durch die bei bekannten Schürfkübeln die Kippbewegungen gesteuert werden. Die andere Kippbewegung zwischen dem Schürkübel und dem Kipp-

- 5 -

rahmen dient vor allem für Kippbewegungen nach hinten in eine Transportstellung, in der das aufgenommene Gut nicht aus dem Schürfkübel herausfallen kann. Das ist besonders wichtig, wenn das aufgenommene Gut stark rieselfähig oder gar fließfähig ist, wie es bei Baustoffen häufig, bei der Stallentmistung im allgemeinen vorkommt.

Schürfkübel in der Ausbildung mit Merkmalen nach der Erfindung haben den besonderen Vorteil, daß die bei der Entleerung des Kübels wirksame Kippkante relativ zu bekannten Anordnungen weit vor dem Fahrzeug liegt, so daß das entleerte Gut sich nicht sogleich bis den den Bereich des Fahrzeugs ausbreitet. In Verbindung mit der Verwendung eines Gabelstablers werden durch die neuen Merkmale auch relativ große Schütthöhen bei der Entleerung des Schüttkübels ermöglicht, worin ein weiterer Vorteil mit besonderer Bedeutung zu sehen ist.

Zur Unterbringung der die Kippbewegung zwischen dem Halterahmen und dem Kipprahmen bewirkenden Kolbenzylindereinheit in der minimalen Raumhöhe der beiden flachen Rahmen ist nach einem weiteren Gedanken der Erfindung vorgesehen, daß diese genannte Kolben-Zylindereinheit einerseits an einen Festpunkt angelenkt ist und sich andererseits unmittelbar oder mittelbar verschiebbar gegen die Unterseite des Kipprahmens abstützt. Zweckmäßig ist die Anlenkung dieser letzteren Seite der Kolben-Zylindereinheit an einen Schwinghebel, dessen eines Ende der Kolben-Zylindereinheit gegenüberliegend an einen Festpunkt angelenkt ist und dessen anderes Ende sich verschiebbar gegen die Unterseite des Kipprahmens oder eines mit diesem verbundenen Teils abstützt.

Zur näheren Erläuterung der Erfindung ist diese mit einigen besonderen Einzelheiten auf der Zeichnung dargestellt. In dieser beispielsweisen Darstellung zeigen:

Figur 1 eine schematische Seitenansicht,

Figur 2 die gleiche Ansicht in Kippstellung des Schürfkübels,

Figur 3 eine Draufsicht auf die Darstellung in Figur 1 und

Figur 4 ein Schema für die Anordnung der Kippmechanik.

Dargestellt ist die Erfindung in der bevorzugten Verbindung mit einem Gabelstabler 1 auf einem Fahrwerk mit vier Rädern 2 und einem an der Vorderseite angeordneten Hubwerk 3 für die beiden sich etwa horizontal nach vorn erstreckenden Gabelarme 4.

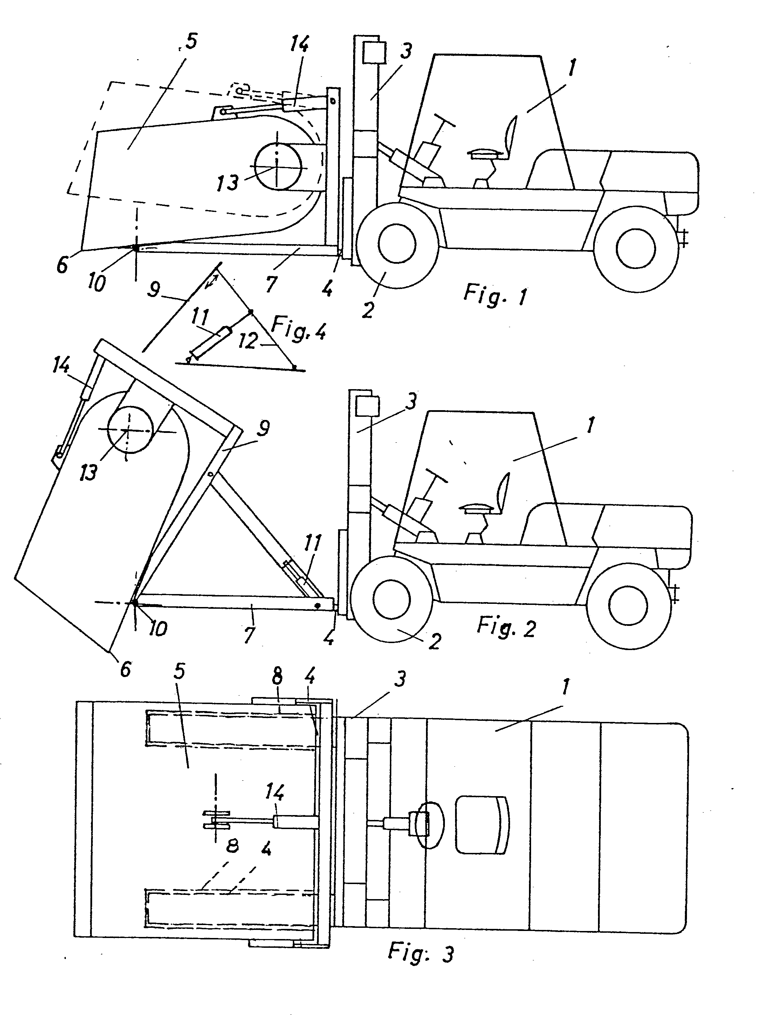

Der im Beispiel datgestellte Schürfkübel 5 ist an der Vorderseite offen und weist eine untere Schürfkante 6 auf, die gleichzeitig die Kippkante bildet, über die der Kübelinhalt bei der Entleerung nach

- 7 -

abrutscht. Zur Befestigung des Schürfkübels 5 auf den Gabelarmen 4 ist eine flacher Halterahmen 7 vorgesehen, der sich etwa in der Ebene der beiden Gabelarme 4 erstreckt und seitliche Einschubtaschen 8 aufweist, in die die Gabelarme 4 allein durch Fahrbewegungen des Gabelstaplers 1 einschiebbar sind. Mit dem Halterahmen 7 ist ein ebenfalls flacher Kipprahmen 9 um eine an der Vorderseite des Halterahmens angeordnete Querachse 10 gelenkig verbunden, so daß der Kipprahmen gegenüber dem Halterahmen um die Querachse 10 in beliebige Winkellagen nach oben schwenken kann. Für die Ausführung dieser Schwenkbewegung ist eine Kolben-Zylindereinheit 11 vorgesehen, die mittels handelsüblicher Schnellverschlüße an die Hydraulikanlage des Gabelstablers anschließbar ist. Um diese Kolben-Zylindereinheit 11 in der sehr kleinen Raumhöhe der beiden Rahmen 7 und 9 unterbringen zu können, ist eine Anlenkung nach dem Schema in der Figur 4 unter Zwischenschaltung eines Schwinghebels 12 vorgesehen. Danach sind das eine Ende der Kolben-Zylindereinheit 11 und das eine Ende des Schwinghebels 12 mit einem Abstand voneinander an den Halterahmen 7 angelenkt. Das andere Ende der Kolben-Zylindereinheit 11 greift gelenkig an den Schwinghebel 12 an, und dessen freies Ende stützt sich verschiebbar gegen die Unterseite des Kipprahmens 9 ab. Eine Besonderheit der Ausbildung nach der Erfindung ist außerdem die Lagerung des Schürfkübels 5 auf dem Kipprahmen 9, wodurch eine Kippbewegung des Schürfkübels 5 nach hinten erreicht wird. Dazu ist der Schürfkübel 5 um eine zweite Querachse 13 schwenkbar in einem sich in der Schürfstellung etwa senkrecht nach oben erstreckenden Teil des Kipprahmens 9 gelagert, wobei diese Querachse 13 hinter der ersteren Querachse 10 liegt. Außerdem ist der Schürfkübel 5 mit dem genannten Teil des Kipprahmens 9 durch eine weitere Kolben-Zylindereinheit 1 4 verbunden, die vor dieser Querachse 13 an den Schürfkübel angelenkt ist, so daß eine Schwenkbewegung nach hinten erfolgt, im Gegensatz zu der Schwenkbewegung zwischen den beiden Rahmen 7 und 9, deren die Rahmen verbindende Kolben- Zylindereinheit hinter der zugehörigen Querachse 10 angelenkt ist.

- -- -

9

0039050

Patentansprüche
------------------

1. Schürfkübel mit um eine Querachse kippbarer Lagerung in einem Traggestell, welches an vertikal beweglichen Armen an der Vorderseite eines Fahrzeugs befestigbar ist und Kolben-Zylindereinheiten für die Kippbewegungen trägt, die mit der Hydraulikanlage des Fahrzeugs verbindbar sind, gekennzeichnet durch einen flachen, das Traggestell bildenden Halterahmen (7) und durch einen mit diesem um die an der Rahmenvorderseite angeordnete Querachse (10) schwenkbar verbundenen, den Schürfkübel (5) tragenden Kipprahmen (9), die beide durch eine hinter der Querachse (10) angelenkte Kolben-Zylindereinheit (11) miteinander verbunden sind.

2. Schürfkübel nach Anspruch 1, dadurch gekennzeichnet, daß er mit dem Kipprahmen (9) um eine zweite Querachse (13), die hinter der ersteren Querachse (10) angeordnet ist, gelenkig und mittels einer vor der zweiten Querachse (13) angelenkten Kolben-Zylindereinheit beweglich verbunden ist.

3. Schürfkübel nach den Ansprüchen 1 und 2, dadurch gekennzeichnet, daß die Kolben-Zylindereinheit (11) zwischen dem Halterahmen und dem Kipprahmen einerseits in einem Festpunkt und andererseits verschiebbar befestigt ist.

4. Schürfkübel nach den Ansprüchen 1 bis 3, dadurch gekennzeichnet, daß die Kolben-Zylindereinheit (11) andererseits gelenkig mit einem Schwinghebel (12) verbunden ist, dessen eines Ende der Kolben-Zylindereinheit gegenüberliegend an einen Festpunkt angelenkt ist und dessen anderes Ende sich verschiebbar gegen die Unterseite des Kipprahmens (9) abstützt.

5. Schürfkübel nach den Ansprüchen 1 bis 4, dadurch gekennzeichnet, daß sein Halterahmen (7) sich parallel zueinander und parallel zu der Ausdehnungsebene des Halterahmens erstreckende Einschubtaschen (8) aufweist, in die die Gabelarme (4) eines Gabelstablers einschiebbar sind.

0039050

Fig. 1

Fig. 4

Fig. 2

Fig. 3

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 625 125 (COVEM) <br><br> * Insgesamt * <br><br> --- | 1,2 |
| | DE - A - 2 225 590 (RHEINSTAHL) <br><br> * Seite 6, Zeile 24 bis Seite 8, Zeile 30; Figuren 2-4 * <br><br> --- | 1,2 |
| | DE - B - 1 296 577 (MARCHEVET) <br><br> * Insgesamt * <br><br> --- | 1,2 |
| | DE - A - 1 757 961 (ANDREAS) <br><br> * Seite 6, Zeile 12 bis Seite 8, Zeile 5; Figuren 1 und 2 * <br><br> --- | 1 |
| | DE - A - 1 909 542 (HUGO ROSEN- BERGER) <br><br> * Insgesamt * <br><br> --- | 1 |
| | GB - A - 1 283 701 (I.A. BALL) <br><br> * Seite 1, Zeile 51 bis Seite 2, Zeile 61; Figuren 1-4 * <br><br> --- | 1,5 |
| | US - A - 2 482 692 (L.L. QUALES) <br><br> * Spalte 1, Zeile 41 bis Spalte 3, Zeile 8; Figuren 1-4 * <br><br> --- | 3,5 |
| | DE - A - 1 804 765 (BASENER) <br><br> * Seite 6, Zeile 23 bis Seite 7, Zeile 16; Seite 8, Zeilen 9-30; Seite 9, Zeile 5 bis Seite 11, Zeile 21; Figuren 1-3 * <br><br> --- ./. | 4 |

**KLASSIFIKATION DER ANMELDUNG (Int. Cl.³)**

E 02 F 3/82
E 02 F 3/64
B 62 D 49/02

**RECHERCHIERTE SACHGEBIETE (Int. Cl.³)**

E 02 F
B 62 D
B 66 F
B 60 P
A 01 C
A 01 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27.07.1981 | JAUNEZ |

| Europäisches Patentamt | EUROPÄISCHER RECHERCHENBERICHT |
|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 582 759 (C.V. SASS)<br><br>* Spalte 1, Zeile 51 bis Spalte 2, Zeile 24; Figuren 1,2,5,9 *<br>--- | 5 |
| A | GB - A - 868 722 (DOHERTY) | |
| A | DE - B - 1 234 624 (SALZGITTER) | |
| A | FR - A - 1 068 273 (FREINS J. MONNERET) | |
| A | US - A - 2 917 196 (R. HASTINGS)<br><br>---------- | |

**KLASSIFIKATION DER ANMELDUNG (Int.Cl. 3)**

**RECHERCHIERTE SACHGEBIETE (Int. Cl. 3)**